# FASCICULE DE BREVET EUROPEEN

(11) **EP 3 623 065 B1**
(45) Date de publication et mention de la délivrance du brevet: **30.10.2024**
(21) Numéro de dépôt: 19195650.7
(22) Date de dépôt: 05.09.2019
(51) Int. Cl.: B09C 1/00, B09C 1/08, E02D 3/00, E02D 3/02, E21B 7/26

(54) **PROCEDE D'INJECTION D'UN PRODUIT DEPOLLUANT DANS LE SOL SOUS FORME DE BANDE HELICOIDALE ET DISPOSITIF CORRESPONDANT**
INJEKTIONSVERFAHREN EINES REINIGENDEN PRODUKTS IN DEN BODEN IN FORM EINES SPIRALFÖRMIGEN BANDES UND ENTSPRECHENDE VORRICHTUNG
METHOD FOR INJECTING A POLLUTION-REMOVING PRODUCT INTO SOIL IN THE FORM OF A HELICAL STRIP AND CORRESPONDING APPARATUS

(30) Priorité: 13.09.2018 FR 1858239
(43) Date de publication de la demande: 18.03.2020
(73) Titulaire: Soletanche Freyssinet, 92500 Rueil-Malmaison (FR)
(72) Inventeur: KLEIN, Pierre-Yves, 92500 Rueil Malmaison (FR); DELHORBE, Stéphane, 92500 Rueil Malmaison (FR); MYCHAK, Nicolas, 92500 Rueil Malmaison (FR)
(74) Mandataire: Cabinet Beau de Loménie

(56) Documents cités:
- EP-A1- 2 156 907
- EP-A2- 0 453 839
- GB-A- 2 301 134
- NL-A- 8 802 012

## Description

### Arrière-plan de l'invention

L'invention concerne le domaine de la dépollution de sol. Par sol, on entend tout type de terrain, y compris les terrains saturés en eau, comme les nappes phréatiques.

L'invention concerne plus précisément les techniques de dépollution mettant en oeuvre un procédé *in situ,* c'est-à-dire sans excavation des déblais hors du sol.

Les procédés de dépollution *in situ* sont intéressants en ce qu'ils présentent un faible impact environnemental et sont moins onéreux que les procédés traditionnels dans lesquels le terrain est excavé.

Parmi les procédés de dépollution *in situ,* on connaît les procédés qui mettent en oeuvre un tube à manchette et ceux qui mettent en oeuvre un procédé de soil-mixing.

La mise en oeuvre par tube à manchette permet d'intervenir précisément dans la zone à traiter et d'injecter dans le sol le produit dépolluant avec suffisamment de débit et de pression pour convoyer les particules réactives du produit dépolluant dans la porosité des sols, tout en évitant le claquage du sol.

Dans les terrains perméables, cette technique permet d'atteindre des rayons d'action de plus d'un mètre. Toutefois, cette technique a des limites dans la mesure où elle ne permet pas de traiter des zones polluées ayant des perméabilités inférieures à 10-5 m/s.

La technique de soil-mixing, qui consiste à mélanger *in situ* le sol en place avec le produit dépolluant permet de pallier la problématique de la perméabilité du sol par une mise en oeuvre forcée. Ce type de traitement est efficace mais présente plusieurs inconvénients. En premier lieu, le coût de mise en oeuvre est significatif en raison du délai de réalisation de l'étape de soil-mixing. Un autre inconvénient est que l'étape de soil-mixing a pour effet de déstructurer le terrain. En effet, après l'étape de mélange du sol en place avec le produit, le terrain perd de ses caractéristiques mécaniques du fait de l'ajout d'eau et de sa déstructuration. Enfin, ce procédé génère souvent des spoils, également appelés survolumes de sol, à cause du foisonnement du terrain et de l'ajout du produit dépolluant dont le volume ne peut prendre place dans la porosité des terrains pour les sols limoneux ou argileux. Le document NL8802012 A montre un procédé et une installation d'injection d'un produit dans un sol avec une tarière ayant une âme creuse, un axe longitudinal et une spire hélicoïdale ainsi qu'une buse d'injection reliée à un dispositif d'alimentation en produit, le procédé consistant à visser verticalement la tarière dans le sol.

### Objet et résumé de l'invention

Un but de la présente invention est de proposer un nouveau procédé de dépollution de sol remédiant aux inconvénients précités.

Pour ce faire, l'invention porte sur un procédé d'injection d'un produit dépolluant dans un sol, dans lequel :
on fournit une installation comprenant une tarière comportant une âme creuse ayant un axe longitudinal et une spire hélicoïdale entourant l'âme creuse, la tarière étant rotative autour de l'axe longitudinal, l'installation comportant en outre une buse d'injection reliée à un dispositif d'alimentation en produit dépolluant ;
on visse la tarière dans le sol selon une direction d'introduction sensiblement verticale ; puis
on réalise une étape de remontée de la tarière au cours de laquelle on dévisse la tarière tout en injectant le produit dépolluant dans le sol de façon à former une bande hélicoïdale de produit dépolluant s'étendant autour de la direction d'introduction.

On comprend donc que l'injection du produit dépolluant dans le sol est réalisée sans déstructuration du terrain, contrairement au procédé de soil-mixing dans lequel on mélange *in situ* le sol en place avec le produit dépolluant.

Par vissage/dévissage, on entend un mouvement de rotation associé à un mouvement de translation descendant/montant, réalisé
de façon à ne pas excaver le sol. Pour ce faire, lors du vissage ou du dévissage, la tarière présente une vitesse de translation qui est égale à p*Ω, où p est le pas de la spire et Ω la vitesse de rotation de la tarière. On comprend donc que le vissage est réalisé sans malaxage du sol de façon à ne pas déstructurer le terrain. Il en est de même du dévissage.

Sans sortir du cadre de l'invention, la vitesse de rotation de la tarière lors du dévissage, en valeur absolue, peut être différente ou égale à celle de la tarière lors du vissage.

On évite donc de diminuer les caractéristiques mécaniques et la production de spoils tout en permettant de placer le produit dépolluant dans la zone à traiter.

Grâce à l'invention, l'injection peut être réalisée de façon localisée, sur une certaine épaisseur de sol.

De préférence, la sortie est positionnée vers la périphérie de façon à éviter d'être colmatée pendant les phases de vissage et dévissage.

Avantageusement, au cours de l'étape de remontée, on réalise au moins une étape de compactage au cours de laquelle on arrête l'injection et on descend la tarière sans rotation afin de compacter le sol.

Un intérêt de l'étape de compactage est de tasser le sol sous la tarière et de remplir le vide central formé par l'empreinte de l'âme de la tarière. Cela permet de conserver, à tout le moins très peu modifier, les propriétés mécaniques du sol. Au cours de l'étape de compactage, la distance de descente de la tarière est très inférieure à la distance de montée. La distance de descente, correspondant au tassement du sol, est de l'ordre de quelques centimètres. De préférence, le tassement est inférieur à 10 cm par mètre-linéaire de colonne..

La bande hélicoïdale de produit dépolluant va ensuite diffuser progressivement dans le sol afin de traiter la zone contaminée, et ce sans risque de claquage ou déstructuration du sol.

Au sens de la présente invention, on entend par sol, le terrain, qui peut aussi être saturé d'eau.

Préférentiellement, on réalise plusieurs étapes de compactage pendant l'étape de remontée de la tarière. Dans ce cas, chaque étape de compactage est réalisée à l'issue d'une phase de l'étape de montée. Un intérêt est d'assurer que la totalité de la hauteur du volume de sol dans lequel a été introduite la tarière est correctement tassée.

Par exemple, on pourra réaliser une étape de compactage tous les 1 à 3 mètres lors de la remontée de la tarière.

Selon un mode de mise en oeuvre avantageux, le produit dépolluant comprend du fer zéro valent, ce qui permet de traiter des sols contenant des solvants halogénés, par exemple des solvants chlorés.

La réaction du produit dépolluant avec le sol est une réduction, ce qui permet par exemple une déchloration des solvants chlorés se trouvant dans la zone à traiter.

De préférence, le produit dépolluant comprend en outre de la matière carbonée, afin de créer les conditions d'une dégradation biologique anaérobique).

Selon un aspect particulièrement avantageux de l'invention, le produit dépolluant comprend en outre un produit polymère. De préférence, le polymère est un gélifiant et/ou un épaississant.

Le polymère a pour effet de conférer stabilité et viscosité au produit dépolluant, grâce à quoi le mélange est pompable et la bande hélicoïdale de produit dépolluant reste bien en place dans l'épaisseur de la zone à traiter, ce qui permet au produit dépolluant de diffuser son action sur la hauteur de la zone à traiter.. L'ajout de polymère permet également de conférer au produit dépolluant un comportement rhéologique permettant son injection piston.

De préférence, le produit polymère comprend de la gomme de guar et/ou de la gomme de xanthane. On comprend donc que le produit polymère peut être un mélange des deux gommes.

A titre d'exemple non limitatif, le produit dépolluant est constitué
d'un mélange comprenant :
entre 100 et 400 g/L d'un mélange de fer zéro valent et de matière carbonée ; et
entre 3 et 10 g/L de produit polymère.

Comme exposé ci-dessus, une application avantageuse du procédé selon l'invention consiste à traiter un sol contenant des solvants halogénés, notamment les sols contenant des solvants chlorés.

L'invention concerne en outre une installation d'injection d'un produit dépolluant dans le sol selon la revendication 10 pour la mise en oeuvre du procédé d'injection selon l'invention, l'installation d'injection comprenant :
- une tarière comportant une âme creuse ayant un axe longitudinal et une spire hélicoïdale entourant l'âme creuse, la tarière étant rotative autour de l'axe longitudinal ;
- une buse d'injection ayant une sortie qui est radialement distante de l'axe longitudinal de l'âme creuse de la tarière ; et
- un dispositif d'alimentation relié à la buse d'injection pour alimenter la buse d'injection en produit dépolluant.

La sortie de la buse d'injection peut être disposée au-dessus ou en-dessous de la spire.

De préférence, la tarière présente un diamètre compris entre 80 cm et 150 cm.

L'âme creuse présente un diamètre extérieur préférentiellement compris entre 10 et 30 centimètres.

Lorsque la sortie est disposée au-dessus de la spire, le produit dépolluant peut se répandre sur la spire, ce qui permet de former une bande hélicoïdale de produit dépolluant dont la surface est sensiblement horizontale ou légèrement inclinée par rapport à l'horizontale.

De préférence, considérée dans un plan perpendiculaire à l'axe longitudinal, la sortie de la buse d'injection est disposée sensiblement au milieu de la spire.

Cette position permet de mieux répandre radialement le produit dépolluant, notamment lorsque la sortie de la buse est disposée au-dessus de la spire.

Aussi, de préférence, la sortie de la buse est disposée au-dessus de la spire, sensiblement au milieu de la spire. La direction de pulvérisation est préférentiellement inclinée par rapport à un plan perpendiculaire à l'axe longitudinal de la tarière, afin de bien répandre le produit dépolluant sur la face supérieure de la spire.

Cela permet d'obtenir une bande hélicoïdale ayant une largeur importante, ladite largeur étant considérée radialement par rapport à l'axe de la tarière dans un plan perpendiculaire à l'axe longitudinal.

De façon générale, la buse d'injection est agencée de façon à répandre le produit dépolluant sur une face supérieure de la spire.

La buse d'injection présente ainsi et de préférence une direction de pulvérisation qui est non-parallèle à l'axe longitudinal de l'âme creuse.

Avantageusement, la buse d'injection présente une direction de pulvérisation qui est dirigée vers un bord périphérique de la spire. Un intérêt est d'éviter le colmatage de la sortie de la buse lors des phases de vissage et dévissage.

Encore de préférence, la tarière comporte une unique buse d'injection. Un intérêt est de pouvoir décolmater la sortie de la buse en augmentant sensiblement la pression d'injection.

Pour alimenter la buse d'injection en produit dépolluant, l'installation comporte en outre un conduit reliant la buse d'injection à l'âme creuse, puis à un dispositif d'alimentation. Le produit dépolluant est introduit dans l'âme creuse par des moyens connus au niveau de l'extrémité supérieure de la tarière.

### Brève description des dessins

L'invention sera mieux comprise à la lecture de la description qui suit d'un mode de mise en oeuvre de l'invention donné à titre d'exemple non limitatif, en référence aux dessins annexés, sur lesquels :
- la figure **1** illustre une installation conforme à la présente invention ;
- la figure **2** illustre l'étape de vissage du procédé d'injection selon l'invention ;
- la figure **3** illustre une première phase d'une étape de remontée du procédé d'injection selon l'invention ;
- la figure **4** illustre une première étape de compactage réalisée à l'issue d'une première phase de l'étape de remontée, illustrée en figure **3** ;
- la figure **5** illustre une deuxième phase de l'étape de remontée suivant la première étape de compactage de la figure **4** ;
- la figure **6** illustre une deuxième étape de compactage suivant la deuxième phase de l'étape de remontée ;
- la figure **7** illustre le retrait de la tarière hors du sol ;
- la figure **8** illustre la réalisation de plusieurs injections de produit dépolluant dans le sol mettant en oeuvre le procédé selon l'invention ; et
- la figure **9** est une vue de détail de la tarière et de la bande hélicoïdale de produit dépolluant.

### Description détaillée de l'invention

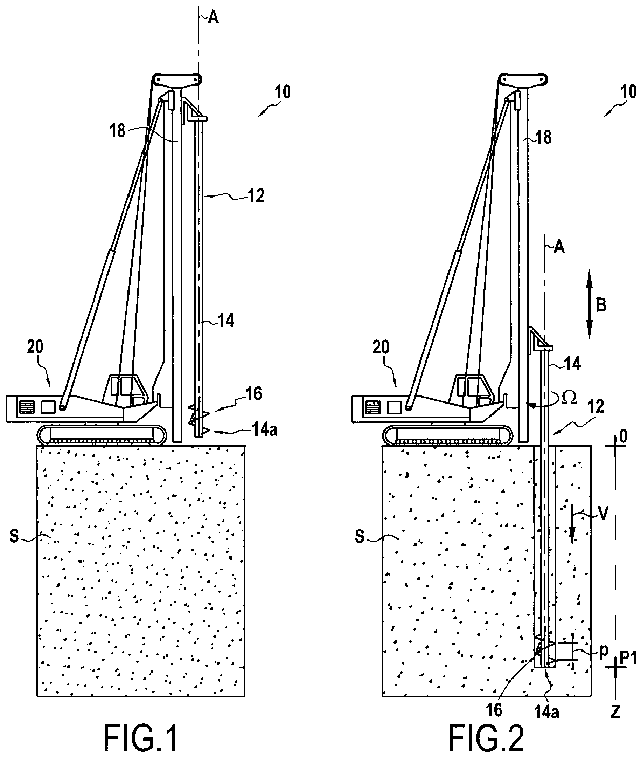

A l'aide des figures **1** à **9****,** on va décrire un mode de mise en oeuvre du procédé d'injection d'un produit dépolluant dans le sol, conforme à la présente invention.

Sur la figure **1****,** on a illustré un sol **S** qui est pollué par des solvants chlorés, par exemple du type TCE (trichloroéthylène).

Pour mettre en oeuvre le procédé d'injection selon l'invention, on fournit une installation **10** qui comprend une tarière **12** comportant une âme creuse **14** ayant un axe longitudinal **A,** dans cet exemple vertical, et une spire hélicoïdale **16** entourant l'âme creuse **14.**

Dans cet exemple, le diamètre de l'âme creuse **14** est de l'ordre de 30 cm, tandis que le diamètre de la spire hélicoïdale **16** est de l'ordre de 120 cm.

Dans cet exemple, le pas **p** de la tarière est de l'ordre de 100 cm.

De façon connue en soi, la tarière **10** est reliée à un mât **18** d'un porteur à chenille **20,** de sorte que la tarière **10** peut être déplacée en translation selon l'axe longitudinal **A,** et être mise en rotation autour de l'axe longitudinal **A.**

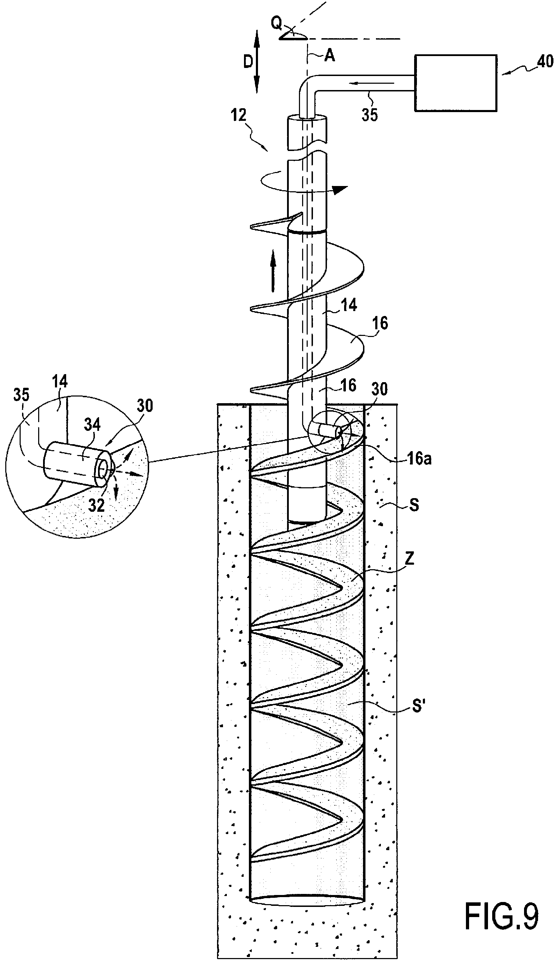

Comme on le constate à l'aide des figures **1** et **9****,** la spire **16** est disposée à l'extrémité inférieure **14**a de l'âme creuse **14,** et présente, dans cet exemple, deux enroulements.

En se référant à la figure **9****,** on constate que l'installation de l'injection **10** comporte en outre une buse à injection **30** ayant une sortie **32.** La buse à injection **30** est, dans cet exemple, disposée au-dessus de la spire **16.** Par ailleurs, la sortie **32** est agencée de façon à être radialement distante de l'axe longitudinal **A** de l'âme creuse de la tarière. Dans cet exemple, la distance entre l'axe longitudinal **A** et la sortie **32** est de l'ordre de 30 cm.

On constate par ailleurs que, considérée dans un plan **Q** perpendiculaire à l'axe longitudinal **A,** la sortie **32** de la buse d'injection **30** est disposée sensiblement au milieu de la spire **16.** Comme cela est illustré à l'aide des petites flèches, la buse d'injection **30** présente une direction de pulvérisation qui est globalement dirigée vers un bord périphérique **16**a de la spire **16.**

Toujours en relation avec la figure **9****,** on constate que l'installation comporte en outre un conduit **34** qui relie la sortie **32** de la buse d'injection à l'âme creuse **14** puis à un dispositif d'alimentation **40** en produit dépolluant.

Autrement dit, ce dispositif d'alimentation **40** est relié à la buse d'injection **30** pour alimenter cette dernière en produit dépolluant.

L'installation comporte par ailleurs un dispositif de déplacement, non illustré ici, pour entraîner la tarière en rotation autour de l'axe longitudinal **A,** et la déplacer en translation selon une direction **D** parallèle à l'axe longitudinal **A.** Ce dispositif de déplacement est notamment configuré pour pouvoir visser et/ou dévisser la tarière dans le sol sans mélanger et déstructurer le terrain. Pour ce faire, la vitesse de déplacement en translation **V** est liée à la vitesse de rotation par la formule suivante **V = p × Ω,** où **V** est la vitesse de déplacement en translation, **p** le pas de la spire et **Ω** la vitesse de rotation de la tarière. On comprend que la vitesse de la tarière peut être positive ou négative selon que l'on visse ou dévisse la tarière.

De façon générale, la buse d'injection **30** est agencée de façon à répandre le produit dépolluant sur la face supérieure **16**a de la spire **16.**

Dans cet exemple, le produit dépolluant comprend du fer zéro valent. Il comprend en outre de la matière carbonée, par exemple un amendement organique, tel que par exemple du fumier broyé.

De façon avantageuse, le produit dépolluant comprend en outre un produit polymère, qui, dans cet exemple, comprend de la gomme de guar.

Sans sortir de la présente invention, le produit polymère pourrait comprendre de la gomme de xanthane.

Plus précisément, le produit dépolluant est constitué d'un mélange comprenant entre 100 et 400 g/L d'un mélange de fer zéro valent et de matière carbonée, et entre 3 et 10 g/L de produit polymère.

Encore de préférence, le mélange pourrait être injecté à un dosage de 0.5% à 1.5% en masse dans le sol.

On va maintenant décrire plus en détail un mode de mise en oeuvre du procédé d'injection selon l'invention.

Comme illustré en figure **2****,** on visse la tarière dans le sol selon une direction d'introduction **B** sensiblement verticale, jusqu'à ce que l'extrémité inférieure de la tarière atteigne une profondeur **P1,** dans cet exemple 6 mètres. La vitesse verticale de déplacement est égale à **p × Ω** où **Ω** est la vitesse de rotation de la tarière.

Dans ce mode de réalisation, la vitesse **V** est égale à 0.5 à 3 mètres/min et le pas est égal à 100 cm.

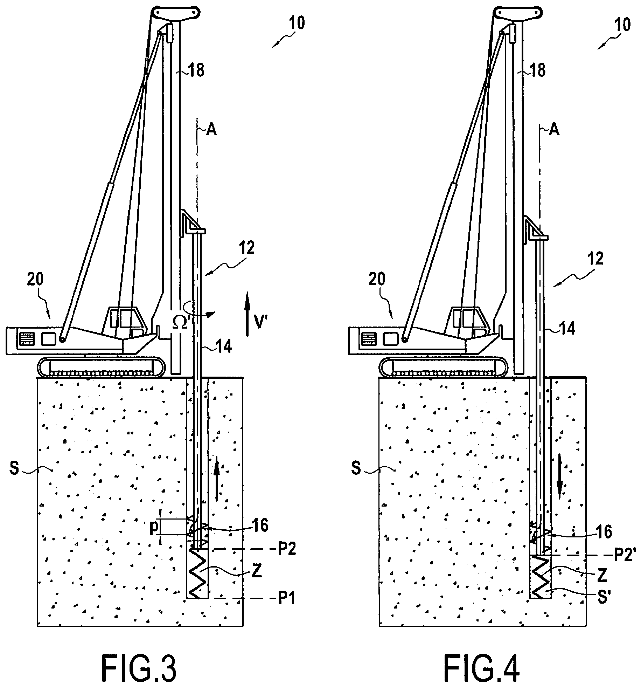

Puis, comme illustré en figure **3**, on réalise une étape de remontée de la tarière au cours de laquelle on dévisse la tarière de sorte que la vitesse **V'** de remontée est égale à **p × Ω'** où **Ω'** est la vitesse de rotation de la tarière tout en injectant le produit dépolluant dans le sol S de façon à former une bande hélicoïdale **Z** de produit dépolluant. Dans cet exemple non limitatif, **Ω** = **-Ω'.**

Cette bande hélicoïdale **Z** s'étend autour de l'axe longitudinal **A.** Cette étape de remontée est mieux visible en figure **9****.** On constate que le produit dépolluant se répand sur la face supérieure de la spire **16** afin de former la bande hélicoïdale **Z.**

Dans cet exemple de mise en oeuvre, au cours d'une première phase de l'étape de remontée, on réalise une première étape de compactage, illustrée en figure **4****,** au cours de laquelle on arrête la montée de la tarière à la profondeur **P2,** on stoppe l'injection, et on descend légèrement la tarière de quelques centimètres sans rotation jusqu'à la profondeur **P2'** afin de compacter le sol. Dans cet exemple, la profondeur **P2** à laquelle on réalise la première étape de compactage est égale à 4 mètres. Au cours de la première étape de compactage, la tarière descend de quelques centimètres. Sur les figures, la distance de descente de la tarière au cours du compactage a été volontairement exagérée afin de rendre les schémas plus lisibles.

En figure **4****,** le sol compacté **S' est** illustré avec des hachures plus denses que les hachures du sol **S.** Le compactage permet également de remplir le trou formé par l'âme creuse de la tarière dans le sol.

Après la première étape de compactage, on poursuit la remontée de la tarière en la dévissant tout en injectant le produit dépolluant de façon à remonter l'extrémité inférieure de la tarière à la profondeur jusqu'à une profondeur **P3,** dans cet exemple 2 mètres.

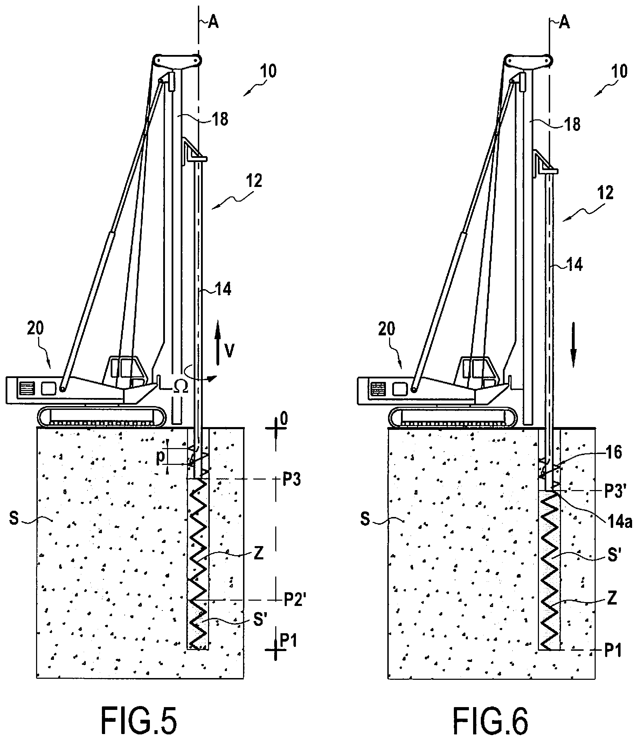

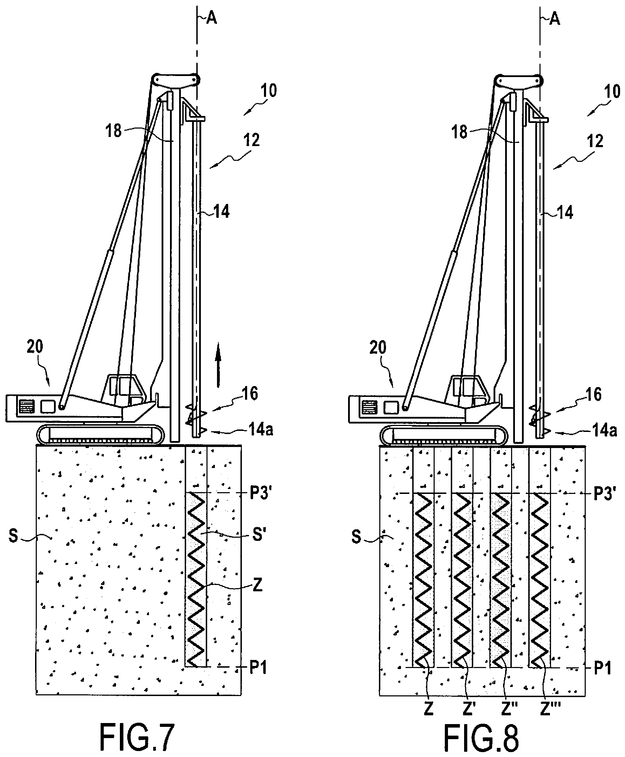

Après quoi, on réalise une seconde étape de compactage lors de laquelle on descend légèrement la tarière par un appui jusqu'à la profondeur **P3',** illustrée en figure **6** de façon à compacter le sol entre les profondeurs **P1** et **P3'.** Là-encore, la distance de descente au cours de la seconde étape de compactage est de l'ordre de quelques centimètres. On stoppe ensuite l'injection de produit polluant et on dévisse la tarière afin de la dégager hors du sol, comme illustré en figure **7****.**

On obtient ainsi une bande hélicoïdale **Z** s'étendant dans une colonne de sol compactée **S'** sur une hauteur comprise entre les profondeurs **P1** et **P3'.**

De préférence, comme illustré en figure **8****,** on met en oeuvre plusieurs fois le procédé d'injection afin de former plusieurs bandes hélicoïdales **Z, Z', Z", Z'"** de produit dépolluant dans le sol **S.**

## Revendications

1. Procédé d'injection d'un produit dépolluant dans un sol, dans lequel :
on fournit une installation (10) comprenant une tarière (12) comportant une âme creuse (14) ayant un axe longitudinal et une spire hélicoïdale (16) entourant l'âme creuse, la tarière étant rotative autour de l'axe longitudinal, l'installation comportant en outre une buse d'injection reliée à un dispositif (40) d'alimentation en produit dépolluant ;
on visse la tarière dans le sol selon une direction d'introduction sensiblement verticale ; puis
on réalise une étape de remontée de la tarière au cours de laquelle on dévisse la tarière tout en injectant le produit dépolluant dans le sol de façon à former une bande hélicoïdale (Z) de produit dépolluant s'étendant autour de l'axe longitudinal (A).

2. Procédé d'injection selon la revendication 1, dans lequel, au cours de l'étape de remontée, on réalise au moins une étape de compactage au cours de laquelle on arrête l'injection et on descend la tarière sans rotation afin de compacter le sol.

3. Procédé d'injection selon la revendication 2, dans lequel on réalise plusieurs étapes de compactage pendant l'étape de remontée de la tarière.

4. Procédé d'injection selon l'une quelconque des revendications précédentes, dans lequel le produit dépolluant comprend du fer zéro valent.

5. Procédé d'injection selon la revendication 4, dans lequel le produit dépolluant comprend en outre de la matière carbonée.

6. Procédé d'injection selon la revendication 4 ou 5, dans lequel le produit dépolluant comprend en outre un produit polymère.

7. Procédé d'injection selon la revendication 6, dans lequel le produit polymère comprend de la gomme de guar et/ou de la gomme de xanthane.

8. Procédé d'injection selon la revendication 6 ou 7, dans lequel le produit dépolluant est constitué d'un mélange comprenant :
entre 100 et 400 g/L d'un mélange de fer zéro valent et de matière carbonée ; et
entre 3 et 10 g/L de produit polymère.

9. Application du procédé d'injection selon l'une quelconque des revendications 1 à 8 pour traiter un sol contenant des solvants halogénés.

10. Installation (10) d'injection d'un produit dépolluant dans le sol pour la mise en oeuvre du procédé d'injection selon l'une quelconque des revendications 1 à 8, l'installation d'injection comprenant :
- une tarière (12) comportant une âme creuse (14) ayant un axe longitudinal (A) et une spire hélicoïdale (16) entourant l'âme creuse, la tarière étant rotative autour de l'axe longitudinal (A) ;
- une buse d'injection ayant une sortie qui est radialement distante de l'axe longitudinal de l'âme creuse de la tarière ;
- un dispositif d'alimentation (40) relié à la buse d'injection (30) pour alimenter la buse d'injection en produit dépolluant ;
- des moyens pour visser la tarière dans le sol selon une direction d'introduction sensiblement verticale ; et
- des moyens pour remonter la tarière en dévissant la tarière tout en injectant le produit dépolluant dans le sol de façon à former une bande hélicoïdale (Z) de produit dépolluant s'étendant autour de l'axe longitudinal (A).

11. Installation selon la revendication 10, dans laquelle, considérée dans un plan (Q) perpendiculaire à l'axe longitudinal (A), la sortie (32) de la buse d'injection (30) est disposée sensiblement au milieu de la spire.

12. Installation selon la revendication 10 ou 11, **caractérisée en ce que** la buse d'injection (30) est agencée de façon à répandre le produit dépolluant sur une face supérieure (16a) de la spire (16).

13. Installation selon l'une quelconque des revendications 10 à 12, dans laquelle, la buse d'injection (30) présente une direction de pulvérisation qui est dirigée vers un bord périphérique (16a) de la spire (16).

14. Installation selon l'une quelconque des revendications 10 à 13, **caractérisée en ce qu'**elle comporte un conduit (34) reliant la sortie (32) de la buse d'injection à l'âme creuse.

## Patentansprüche

1. Einspritzverfahren eines sanierenden Produkts in einen Boden, wobei:
eine Anlage (10) bereitgestellt wird, umfassend einen Erdbohrer (12), umfassend einen hohlen Kern (14), der eine Längsachse und eine den hohlen Kern umgebende schraubenförmige Windung (16) aufweist, wobei der Erdbohrer um die Längsachse drehbar ist, die Anlage ferner umfassend eine Einspritzdüse umfasst, die mit einer Vorrichtung (40) zum Zuführen eines sanierenden Produkts verbunden ist;
der Erdbohrer in einer im Wesentlichen vertikalen Einführrichtung in den Boden geschraubt wird; dann
ein Schritt eines Hochziehens des Erdbohrers durchgeführt wird, in dessen Verlauf der Erdbohrer abgeschraubt wird, während das sanierende Produkt in den Boden eingespritzt wird, sodass ein schraubenförmiges Band (Z) aus sanierendem Produkt gebildet wird, das sich um die Längsachse (A) erstreckt.

2. Einspritzverfahren nach Anspruch 1, wobei während des Hochziehschritts mindestens ein Verdichtungsschritt durchgeführt wird, in dessen Verlauf das Einspritzen gestoppt wird und der Erdbohrer ohne Drehung abgesenkt wird, um den Boden zu verdichten.

3. Einspritzverfahren nach Anspruch 2, wobei während des Hochziehschritts des Erdbohrers mehrere Verdichtungsschritte durchgeführt werden.

4. Einspritzverfahren nach einem der vorherigen Ansprüche, wobei das sanierende Produkt nullwertiges Eisen umfasst.

5. Einspritzverfahren nach Anspruch 4, wobei das sanierende Produkt ferner kohlenstoffhaltiges Material umfasst.

6. Einspritzverfahren nach Anspruch 4 oder 5, wobei das sanierende Produkt ferner ein Polymerprodukt umfasst.

7. Einspritzverfahren nach Anspruch 6, wobei das Polymerprodukt Guargummi und/oder Xanthangummi umfasst.

8. Einspritzverfahren nach Anspruch 6 oder 7, wobei das sanierende Produkt aus einem Gemisch besteht, umfassend:
zwischen 100 und 400 g/l eines Gemischs aus nullwertigem Eisen und kohlenstoffhaltigem Material; und
zwischen 3 und 10 g/l des Polymerprodukts.

9. Anwendung des Einspritzverfahrens nach einem der Ansprüche 1 bis 8 zum Behandeln eines Bodens, der halogenierte Lösungsmittel enthält.

10. Anlage (10) zum Einspritzen eines sanierenden Produkts in den Boden zum Durchführen des Einspritzverfahrens nach einem der Ansprüche 1 bis 8, die Einspritzanlage umfassend:
- einen Erdbohrer (12), umfassend einen hohlen Kern (14), der eine Längsachse (A) und eine den hohlen Kern umgebende schraubenförmige Windung (16) aufweist, wobei der Erdbohrer um die Längsachse (A) drehbar ist;
- eine Einspritzdüse, die einen Auslass aufweist, der radial von der Längsachse des hohlen Kerns des Erdbohrers entfernt ist;
- eine Zufuhrvorrichtung (40), die mit der Einspritzdüse (30) verbunden ist, um der Einspritzdüse das sanierende Produkt zuzuführen;
- Einrichtungen zum Schrauben des Erdbohrers in den Boden in einer im Wesentlichen vertikalen Einführrichtung; und
- Einrichtungen zum Hochziehen des Erdbohrers, indem der Erdbohrer abgeschraubt wird, während das sanierende Produkt in den Boden eingespritzt wird, sodass ein schraubenförmiges Band (Z) aus sanierendem Produkt gebildet wird, das sich um die Längsachse (A) erstreckt.

11. Anlage nach Anspruch 10, wobei, betrachtet in einer Ebene (Q) senkrecht zu der Längsachse (A), der Auslass (32) der Einspritzdüse (30) im Wesentlichen in der Mitte der Windung angeordnet ist.

12. Anlage nach Anspruch 10 oder 11, **dadurch gekennzeichnet, dass** die Einspritzdüse (30) angeordnet ist, um das sanierende Produkt auf einer Oberseite (16a) der Windung (16) auszubreiten.

13. Anlage nach einem der Ansprüche 10 bis 12, wobei die Einspritzdüse (30) eine Zerstäubungsrichtung aufweist, die auf einen Umfangsrand (16a) der Windung (16) gerichtet ist.

14. Anlage nach einem der Ansprüche 10 bis 13, **dadurch gekennzeichnet, dass** sie eine Leitung (34) aufweist, die den Auslass (32) der Einspritzdüse mit dem hohlen Kern verbindet.

## Claims

1. A method for injecting a depolluting product into a soil, in which:
an installation (10) is provided which comprises an auger (12) comprising a hollow core (14) having a longitudinal axis and a helical coil (16) surrounding the hollow core, the auger rotating about the longitudinal axis, the installation further comprising an injection nozzle connected to a device (40) for supplying depolluting product;
the auger is screwed into the soil in a substantially vertical direction of introduction; then
an auger raising step is carried out during which the auger is unscrewed while injecting the depolluting product into the ground so as to form a helical strip (Z) of depolluting product extending around the longitudinal axis (A).

2. The injection method according to claim 1, wherein, during the raising step, at least one compaction step is carried out during which the injection is stopped and the auger is lowered without rotation in order to compact the soil.

3. The injection method according to claim 2, wherein several compaction steps are carried out during the step of raising the auger.

4. The injection method according to any one of the preceding claims, wherein the depolluting product comprises zero valent iron.

5. The injection method according to claim 4, wherein the depolluting product further comprises carbonaceous material.

6. The injection method according to claim 4 or 5, wherein the depolluting product further comprises a polymeric product.

7. The injection method according to claim 6, wherein the polymeric product comprises guar gum and/or xanthan gum.

8. The injection method according to claim 6 or 7, wherein the depolluting product consists of a mixture comprising:
between 100 and 400 g/L of a mixture of zero valent iron and carbonaceous matter; and
between 3 and 10 g/L of polymeric product.

9. An application of the injection method according to any one of claims 1 to 8 for treating a soil containing halogenated solvents.

10. An installation (10) for injecting a depolluting product into the soil for implementing the injection method according to any one of claims 1 to 8, the injection installation comprising:
- an auger (12) comprising a hollow core (14) having a longitudinal axis (A) and a helical coil (16) surrounding the hollow core, the auger being rotatable about the longitudinal axis (A);
- an injection nozzle having an outlet which is radially distant from the longitudinal axis of the hollow core of the auger;
- a supply device (40) connected to the injection nozzle (30) for supplying the injection nozzle with depolluting product
- means for screwing the auger into the soil in a substantially vertical direction of introduction; and
- means for raising the auger by unscrewing the auger while injecting the depolluting product into the ground so as to form a helical strip (Z) of depolluting product extending around the longitudinal axis (A).

11. The installation according to claim 10, wherein, considered in a plane (Q) perpendicular to the longitudinal axis (A), the outlet (32) of the injection nozzle (30) is disposed substantially in the middle of the coil.

12. The installation according to claim 10 or 11, **characterized in that** the injection nozzle (30) is arranged so as to spread the depolluting product on an upper face (16a) of the coil (16).

13. The installation according to any one of claims 10 to 12, wherein the injection nozzle (30) has a spraying direction which is directed toward a peripheral edge (16a) of the coil (16).

14. The installation according to any one of claims 10 to 13, **characterized in that** it comprises a conduit (34) connecting the outlet (32) of the injection nozzle to the hollow core.
